# EUROPEAN PATENT APPLICATION

(11) **EP 4 539 230 A1**
(43) Date of publication of application: **16.04.2025**
(21) Application number: 23901032.5
(22) Date of filing: 04.12.2023
(51) Int. Cl.: H01M 50/258, H01M 50/204, H01M 50/264, H01M 50/24

(54) **BATTERY PACK**

(30) Priority: 05.12.2022 KR 20220168164; 06.03.2023 KR 20230029129
(71) Applicant: LG Energy Solution, Ltd., Seoul 07335 (KR)
(72) Inventor: YANG, Chang Hyeon, Daejeon 34122 (KR); LEE, Hyoung Suk, Daejeon 34122 (KR); SHIN, Ju Hwan, Daejeon 34122 (KR); HUR, Nam Hoon, Daejeon 34122 (KR); LEE, Sang Yoon, Daejeon 34122 (KR)
(74) Representative: Plasseraud IP
(86) International application number: PCT/KR2023/019809
(87) International publication number: WO 2024/123013

(57) **Abstract**

A battery pack includes a housing with a plate part and a side wall, a plurality of battery assemblies, a plurality of first buried guides, a sealing material. The plurality of battery assemblies are on the plate part of the housing, the plurality of first buried guides are provided on corners of an upper surface of the side wall and partially buried in the side wall. The sealing material covers the upper surface of the side wall, in which each of the plurality of first buried guides includes a first flange protruding from the upper surface of the side wall, and a body with a width less than a width of the first flange.

## Description

### [Technical Field]

The present invention relates to a battery pack. The present application claims the benefit of priority based on Korean Patent Application No. 10-2022-0168164, filed on December 5, 2022 and Korean Patent Application No. 10-2023-0029129, filed on March 6, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A recent trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery pack with improved safety and energy density.

### [Technical Solution]

To address the above-described problem, example embodiments of the present invention provide a battery pack. The battery pack includes a housing with a plate part and a side wall, a plurality of battery assemblies on the plate part of the housing, a plurality of first buried guides provided on an upper surface of the side wall and partially buried in the side wall, and a sealing material covering the upper surface of the side wall, in which each of the plurality of first buried guides includes a first flange protruding from the upper surface of the side wall, and a body with a width less than a width of the first flange.

The body may be spaced apart from the side wall with the first flange interposed therebetween.

The sealing material may include a plurality of holes, and the plurality of holes may surround the first flange of each of the plurality of first buried guides.

A height of the sealing material may be greater than a height of the first flange.

A height of the first flange may be in a range of 1 mm to 3 mm.

The body may include an uneven surface.

The plurality of buried guides may be on corners of the upper surface of the side wall.

The battery pack may further include a plurality of second buried guides provided on the upper surface of the side wall and partially buried in the side wall.

Each of the plurality of second buried guides may include a second flange protruding from the upper surface of the side wall.

Each of the plurality of second buried guides may be interposed between corners of the upper surface of the side wall.

Each of the plurality of second buried guides may include an inner wall defining a receiving groove, and the inner wall may include an uneven surface.

Example embodiments provide a battery pack. The battery pack may include a housing with a plate part and a side wall, a plurality of battery assemblies on the plate part of the housing, a sealing material covering an upper surface of the side wall, and a lid plate coupled to the housing, in which the side wall includes a plurality of guide protrusions protruding from the upper surface of the side wall, and the sealing material is interposed between the plurality of guide protrusions.

The plurality of guide protrusions may be provided at both ends of the side wall.

A height of each of the plurality of guide protrusions may be in a range of 25% to 75% of a height of the sealing material.

Each of the plurality of guide protrusions may be spaced apart from corners of the upper surface of the side wall.

The battery pack may further include a plurality of corner brackets coupled to the side wall of the housing or the lid plate, and covering portions of the sealing material on corners of the upper surface of the side wall.

### [Advantageous Effects]

A battery pack according to example embodiments of the present invention includes first and second buried guides. The first and second buried guides may be pressure stoppers for a sealing material for sealing the battery pack, in addition to fixing a housing and ribs of the battery pack. Thus, a stopper coupled to the sealing material may be omitted, and the productivity and energy density of the battery pack can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery pack according to example embodiments.
FIG. 2 is a perspective view of some components of a battery pack according to example embodiments.
FIG. 3 is an enlarged partial perspective view of a part 2A of FIG. 2.
FIG. 4 is a cross-sectional view taken along line 3I-3I' of FIG. 3.
FIG. 5 is an enlarged partial perspective view of a part 2B of FIG. 2.
FIG. 6 is a cross-sectional view taken along line 5I-5I' of FIG. 5.
FIG. 7 is a perspective view of a battery pack according to example embodiments.
FIGS. 8 and 9 are partial perspective views for describing a battery pack according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

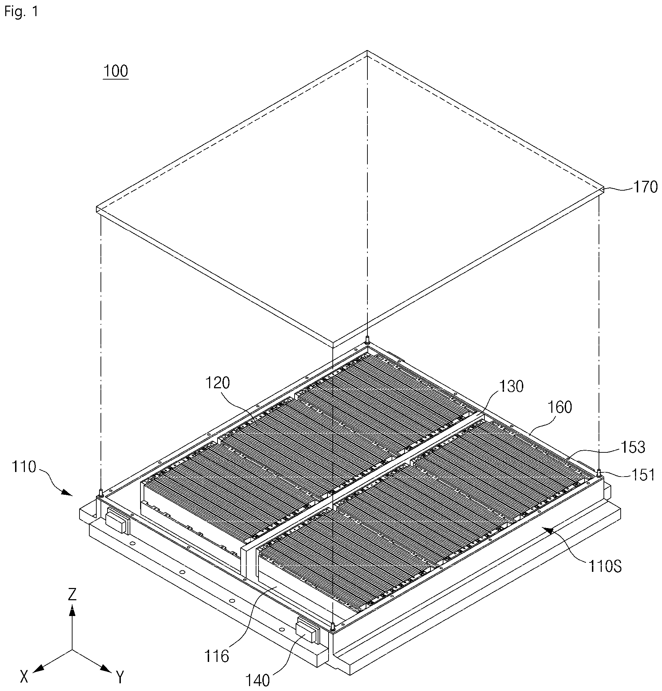

FIG. 1 is a perspective view of a battery pack 100 according to example embodiments.

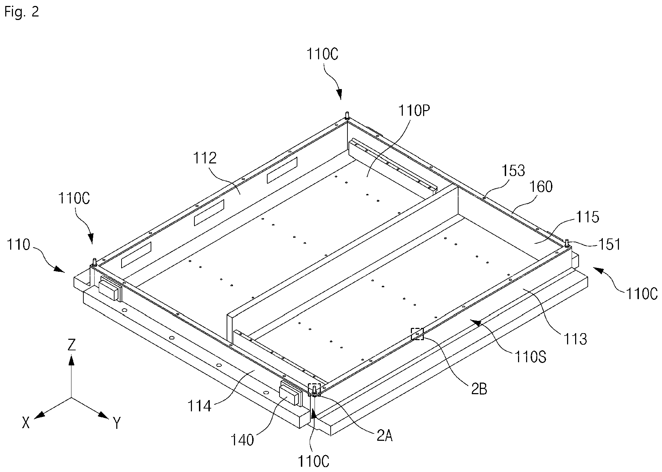

FIG. 2 is a perspective view of some components of a battery pack according to example embodiments.

Referring to FIGS. 1 and 2, the battery pack 100 may include a housing 110, a plurality of battery assemblies 120, a center beam 130, a plurality of exhaust devices 140, a plurality of first buried guides 151, a plurality of second buried guides 153, a sealing material 160, and a lid plate 170.The battery pack 100 is a final form of a battery system mounted on a mobility or the like.

The housing 110 may provide a space in which the plurality of battery assemblies 120 are mounted. The housing 110 may include a plate part 110P and a side wall 110S.Two directions substantially parallel to the plate part 110P are defined as an X-axis direction and a Y-axis direction, and a direction substantially perpendicular to the plate part 110P of the housing 110 is defined as a Z-axis direction. The X-axis direction, the Y-axis direction, and the Z-axis direction may be substantially perpendicular to one another. Unless otherwise mentioned, the definition of directions will apply to the following drawings.

The plurality of battery assemblies 120 may be on the plate part 110P of the housing 110.The plate part 110P may support the plurality of battery assemblies 120.The plate part 110P may include an upper surface and a lower surface that are substantially parallel to each other. The upper surface of the plate part 110P may face the plurality of battery assemblies 120.The lower surface of the plate part 110P is opposite to the upper surface of the plate part 110P.

The side wall 110S may horizontally surround the plurality of battery assemblies 120. The side wall 110S may protect the plurality of battery assemblies 120.The side wall 110S may include a first side wall 111, a second side wall 112, a third side wall 113, and a fourth side wall 114.The first to fourth side walls 111, 112, 113, and 114 may be fixed to each other by a method such as friction stir welding or spot welding.

The first and second side walls 111 and 112 may be substantially perpendicular to the Y-axis direction. Each of the third and fourth side walls 113 and 114 may be substantially perpendicular to the X-axis direction. The first and second side walls 111 and 112 may cover side surfaces of the plate part 110P.The third and fourth side walls 113 and 114 may be on the plate part 110P.

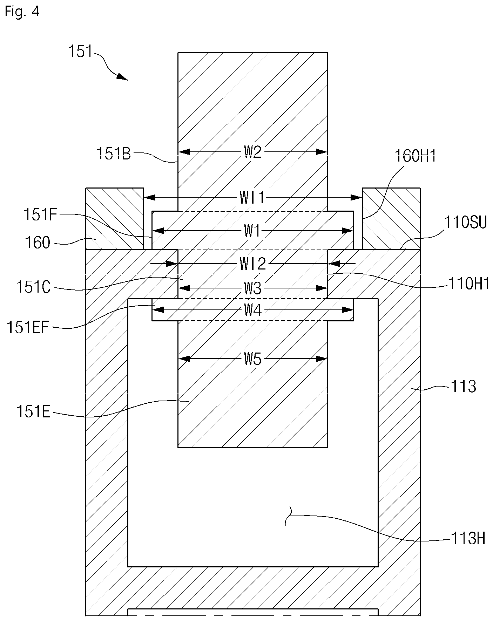

According to example embodiments, the first to fourth side walls 111, 112, 113, and 114 may be provided by an extrusion process. According to example embodiments, the first to fourth side walls 111, 112, 113, and 114 may each include an internal empty space similar to an empty space 113H of FIG. 4, thus reducing the weight of the side wall 110S.According to example embodiments, the empty space of each of the first to fourth side walls 111, 112, 113, and 114 may be a venting path of a gas or a channel of a refrigerant.

Hereinafter, the technical idea of the present invention will be described with reference to an embodiment in which the battery pack 100 is a moduleless type and each of the plurality of battery assemblies 120 does not include a module frame. However, the above description is intended to provide a non-limiting example and thus should not be understood as limiting the technical idea of the present invention in any sense. Those of ordinary skill in the art will be able to easily derive a plurality of battery assemblies including a module frame and a module type battery pack including the same, based on the above description.

The center beam 130 may isolate elements mounted on the housing 110 from each other. Accordingly, the center beam 130 may prevent an undesired short circuit from occurring between the plurality of battery assemblies 120 while protecting the plurality of battery assemblies 120.

The center beam 130 may extend between the third and fourth side walls 113 and 114.The center beam 130 may extend in the X-axis direction. The center beam 130 may be in contact with the third side wall 113 and the fourth side wall 114.The center beam 130 may isolate the plurality of battery assemblies 120 from each other. The center beam 130 may be interposed between the plurality of battery assemblies 120.

An arrangement of the center beam 130 and the plurality of battery assemblies 120 shown in FIG. 1 is a non-limiting example and does not limit the technical idea of this invention in any sense. A battery pack that includes various arrangements and numbers of a center beam and battery assemblies will be easily derived by those of ordinary skill in the art, based on the above description.

The plurality of exhaust devices 140 may be coupled to the third side wall 113. The third side wall 113 may include a plurality of exhaust holes connected to the plurality of exhaust devices 140.The plurality of exhaust holes may be configured to provide a path in which a gas and heat are discharged from the inside of the battery pack 100.

The plurality of exhaust devices 140 may be configured to delay thermal propagation by discharging a high-temperature gas from the inside of the battery pack 100 to the outside when at least one of the plurality of battery assemblies 120 is in a thermal runway state.

Here, the thermal runway state of the plurality of battery assemblies 120 is a state in which a change of temperature of the plurality of battery assemblies 120 accelerates the change of temperature, i.e., an uncontrollable positive feedback. The temperature of the plurality of battery assemblies 120 that are in the thermal runway state sharply increases, and a large amount of high-pressure gas and combustion debris are discharged.

The plurality of first buried guides 151 may be on the side wall 110S.The plurality of first buried guides 151 may be on corners 110C of an upper surface 110SU (see FIG. 4) of the side wall 110S.The plurality of first buried guides 151 may be coupled to the corners 110C of the upper surface 110SU (see FIG. 4) of the side wall 110S.The plurality of first buried guides 151 may be partially buried in the side wall 110S.The plurality of first buried guides 151 may partially protrude from the side wall 110S.

The plurality of second buried guides 153 may be on the side wall 110S.The plurality of second buried guides 153 may be on the upper surface 110SU (see FIG. 4) of the side wall 110S.The plurality of second buried guides 153 may be interposed between the corners 110C of the side wall 110S.The plurality of second buried guides 153 may be interposed between the plurality of first buried guides 151.The plurality of second buried guides 153 may be coupled to the upper surface 110SU (see FIG. 4) of the side wall 110S.The plurality of second buried guides 153 may be partially buried in the side wall 110S.The plurality of second buried guides 153 may partially protrude from the side wall 110S.

Each of the first and second buried guides 151 and 153 may include a metal material. Each of the first and second buried guides 151 and 153 may include, for example, aluminum. Each of the first and second buried guides 151 and 153 may include, for example, steel such as carbon steel, nickel steel, chromium steel, nickel chromium steel, and manganese steel.

The battery pack 100 may further include electronic components. The electronic components may be mounted on the housing 110.The electronic components may be provided between the fourth side wall 114 on which the exhaust devices 140 are installed and the plurality of battery assemblies 120.The electronic components may include an electronic device required to drive the battery pack 100.

The electronic components may include, for example, a battery management system (BMS).The BMS may be configured to monitor, balance, and control the battery pack 100.Monitoring of the battery pack 100 may include measuring voltages and currents of certain nodes inside the plurality of battery assemblies 120 and measuring temperatures at set positions in the battery pack 100.The battery pack 100 may include measuring instruments for measuring voltages, currents, and temperatures as described above.

Balancing of the battery pack 100 is an operation of reducing a deviation between the plurality of battery assemblies 120.The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery assemblies 120.The PRA may be configured to supply or cut off power from a high-voltage battery to an external load (e.g., a motor of a vehicle).The PRA may cut off power supply to an external load (e.g., a motor of a vehicle) to protect the plurality of battery assemblies 120 and an external load (e.g., a motor of a vehicle), when abnormal voltage such as voltage surges occurs.

The battery pack 100 may further include a plurality of bus bars configured to electrically connect the plurality of battery assemblies 120.The plurality of battery assemblies 120 may be connected in series by the plurality of bus bars. Accordingly, the battery pack 100 may be configured to output a high voltage to an external load (e.g., a motor of a vehicle).

The sealing material 160 may include an elastic material. The sealing material 160 may include, for example, rubber such as an ethylene-propylene diene monomer (EPDM).When the housing 110 and the lid plate are coupled to each other, the sealing material 160 may be interposed between the housing 110 and the lid plate. The sealing material 160 may be pressurized by the housing 110 and the lid plate 170 to cause deformation of the sealing material 160.Accordingly, the battery pack 100 may be sealed, and an inner space of the battery pack 100 may be blocked from an external fluid.

The lid plate 170 may be coupled to the housing 110.The lid plate 170 may include a main surface and edge part. The main surface may cover elements, such as the plurality of battery assemblies 120 and electronic components, which are mounted on the battery pack 100. The edge part may be surfaces in contact with the housing 110 and horizontally surround the main surface. As a non-limiting example, the main surface may be elevated compared to the edge part, and the edge part and the main surface may be connected by curved portions thereof.

The lid plate may be coupled to the side wall 110S of the housing 110 by the first and second buried guides 151 and 153.According to example embodiments, the battery pack 100 may further include elements coupled to the first and second buried guides 151 and 153 to fix the lid plate to the side wall 110S of the housing 110.The elements may include bolts and nuts but are not limited thereto.

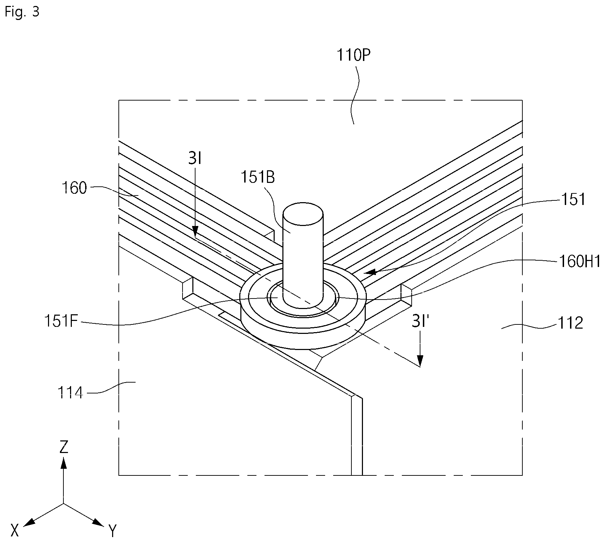

FIG. 3 is an enlarged partial perspective view of a part 2A of FIG. 2.

FIG. 4 is a cross-sectional view taken along line 3I-3I' of FIG. 3. More specifically, FIG. 4 illustrates the sealing material 160 that has yet to be pressurized by the lid plate 170 (see FIG. 1).

Referring to FIGS. 2 to 4, each of the plurality of first buried guides 151 may include a first flange 151F, a body 151B, a connection part 151C, a first buried flange 151EF, and an extension part 151E.In FIG. 4, dashed lines are imaginary lines for distinguishing the first flange 151F, the body 151B, the connection part 151C, the first buried flange 151EF, and the extension part 151E of each of the plurality of first buried guides 151 from one another. According to example embodiments, the plurality of first buried guides 151 may be configured to guide the assembly of the sealing material 160.

As a non-limiting example, the first flange 151F may have a roughly cylindrical shape. However, the present invention is not limited thereto, and the first flange 151F may have various shapes such as a triangular pillar, a square pillar, a pentagonal pillar, a hexagonal pillar, a cross pillar, and a star-shaped pillar. A height of the cylindrical shape of the first flange 151F may be substantially parallel to the Z-axis direction. The first flange 151F may protrude from the upper surface 110SU of the side wall 110S.The first flange 151F may be on the upper surface 110SU of the side wall 110S.

The body 151B may have a roughly cylindrical shape. The body 151B may extend in the Z-axis direction. A height of the cylindrical shape of the body 151B may be substantially parallel to the Z-axis direction. A width W2 of the body 151B may be less than a width W1 of the first flange 151F.The body 151B may be connected to the first flange 151F.The body 151B may be spaced apart from the upper surface 110SU of the side wall 110S with the first flange 151F interposed therebetween.

The connection part 151C may have a roughly cylindrical shape. A height of the cylindrical shape of the connection part 151C may be substantially parallel to the Z-axis direction. The connection part 151C may be connected to the first flange 151F and the first buried flange 151EF.A width W3 of the connection part 151C may be less than the width W1 of the first flange 151F.

The connection part 151C may face a portion of the side wall 110S defining a first hole 110H1. According to example embodiments, a width WI2 of the first hole 110H1 may be greater than the width W3 of the connection part 151C.According to example embodiments, the width WI2 of the first hole 110H1 may be substantially the same as the width W3 of the connection part 151C.

The first buried flange 151EF may be interposed between the connection part 151C and the extension part 151E.A width W4 of the first buried flange 151EF may be greater than the width W3 of the connection part 151C and the width W5 of the extension part 151E.The first buried flange 151EF may be buried in the side wall 110S.Each of the plurality of first buried guides 151 may be fixed to the side wall 110S by the first buried flange 151EF and the first flange 151F.

The extension part 151E may have a roughly cylindrical shape. A height of the cylindrical shape of the extension part 151E may be substantially parallel to the Z-axis direction. The extension part 151E may extend in the Z-axis direction. A width W5 of the extension part 151E may be substantially the same as the width W3 of the connection part 151C.

The above-described widths W1, W2, W3, W4, W5, WI1, and WI2 are referred to as widths in the broadest sense. When one of the first flange 151F, the body 151B, the connection part 151C, the first buried flange 151EF, and the extension part 151E has circular symmetry, one of the widths W1, W2, W3, W4, W5, WI1, and WI2 that corresponds to the one having circular symmetry may be alternatively referred to as a diameter.

As a non-limiting example, each of the plurality of first buried guides 151 may be, for example, an insert bolt such as a rivet stud. In this case, each of the first flanges 151F may be a head of the insert bolt. The body 151B may be a shank of the insert bolt and include an uneven surface such as a screw thread to be coupled to a nut. Due to the burying and fixing of each of the plurality of first buried guides 151, a portion between the connection part 151C and the extension part 151E may be deformed, thus resulting in the formation of a first buried flange 151EF having a greater width than the widths of the connection part 151C and the extension part 151E.

The sealing material 160 may be on the upper surface of the side wall 110S.According to example embodiments, the sealing material 160 may include a plurality of first holes 160H1.The plurality of first holes 160H1 may be penetrated by the plurality of first buried guides 151.The sealing material 160 may horizontally surround the first flange 151F of each of the plurality of first buried guides 151.

According to example embodiments, a height of the first flange 151F may be in a range of about 25% to about 75% of the height of the sealing material 160.Here, the height should be understood to mean a length in the Z-axis direction. For example, when the height of the sealing material 160 is about 4 mm, the height of the first flange 151F may be in a range of about 1 mm to about 3 mm. Before being pressed by the lid plate 170 (see FIG. 1), the sealing material 160 may horizontally surround a lower part of the body 151B of each of the plurality of first buried guides 151. When the lid plate 170 (see FIG. 1) is coupled to the housing 110, the height of the sealing material 160 may be substantially the same as the height of the first flange 151F.

Before being pressed by the lid plate 170 (see FIG. 1), a width WI1 of the plurality of first holes 160H1 of the sealing material 160 may be greater than the width W1 of the first flange 151F.Before being pressed by the lid plate 170 (see FIG. 1), the width WI1 of the plurality of first holes 160H1 of the sealing material 160 may be equal to the width W1 of the first flange 151F.When the lid plate 170 (see FIG. 1) is coupled to the housing 110, the width WI1 of the plurality of first holes 160H1 of the sealing material 160 may be equal to the width W1 of the first flange 151F.

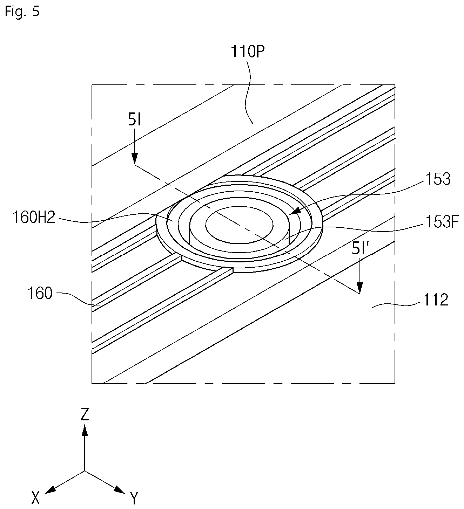

FIG. 5 is an enlarged partial perspective view of a part 2B of FIG. 2.

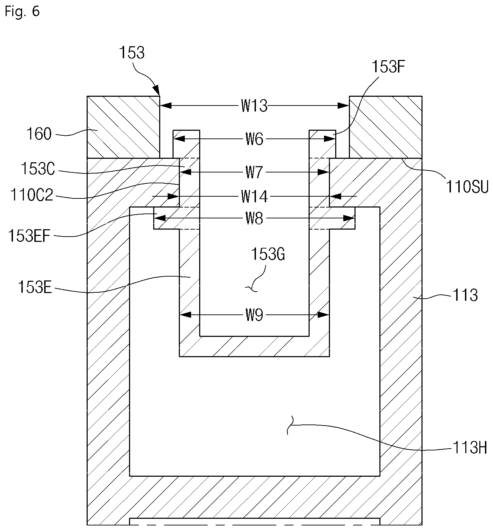

FIG. 6 is a cross-sectional view taken along line 5I-5I' of FIG. 5. More specifically, FIG. 6 illustrates the sealing material 160 that has yet to be pressurized by the lid plate 170 (see FIG. 1).

Referring to FIGS. 2, 5, and 6, each of the plurality of second buried guides 153 may include a second flange 153F, a connection part 153C, a second buried flange 153EF, and an extension part 153E.In FIG. 6, dashed lines are imaginary lines for distinguishing the second flange 153F, the connection part 153C, the second buried flange 153EF, and the extension part 153E of each of the plurality of second buried guides 153 from each other.The plurality of second buried guides 153 may be configured to guide the assembly of the sealing material 160.

As a non-limiting example, the second flange 153F may have a roughly cylindrical shape. However, the present invention is not limited thereto, and the second flange 153F may have various shapes such as a triangular pillar, a square pillar, a pentagonal pillar, a hexagonal pillar, a cross pillar, and a star-shaped pillar. A height of the cylindrical shape of the second flange 153F may be substantially parallel to the Z-axis direction. The second flange 153F may protrude from the upper surface 110SU of the side wall 110S.The second flange 153F may be on the upper surface 110SU of the side wall 110S.

The connection part 153C may have a roughly cylindrical shape. A height of the cylindrical shape of the connection part 153C may be substantially parallel to the Z-axis direction. The connection part 153C may be connected to the second flange 153F and the second buried flange 153EF.A width W7 of the connection part 153C may be less than a width W6 of the second flange 153F.

The connection part 153C may face a portion of the side wall 110S defining a second hole 110H2.According to example embodiments, a width WI4 of the second hole 110H2 may be greater than the width W7 of the connection part 153C.According to example embodiments, the width WI4 of the second hole 110H2 may be substantially the same as the width W7 of the connection part 153C.

The second buried flange 153EF may be interposed between the connection part 153C and the extension part 153E.A width W8 of the second buried flange 153EF may be greater than the width W7 of the connection part 153C and the width W9 of the extension part 153E.The second buried flange 153EF may be buried in the side wall 110S.Each of the plurality of second buried guides 153 may be fixed to the side wall 110S by the second buried flange 153EF and the second flange 153F.

The extension part 153E may have a roughly cylindrical shape. A height of the cylindrical shape of the extension part 153E may be substantially parallel to the Z-axis direction. The extension part 153E may extend in the Z-axis direction. A width W9 of the extension part 153E may be substantially the same as the width W7 of the connection part 153C.

Each of the plurality of second buried guides 153 may further include a receiving groove 153G.The receiving groove 153G may be configured to accommodate an element for fixing the housing 110 and the lid plate 170 (see FIG. 1).

The above-described widths W6, W7, W8, W9, WI3, and WI4 are referred to as widths in the broadest sense. When one of the second flange 153F, the connection part 153C, the second buried flange 153EF, and the extension part 153E has circular symmetry, one of the widths W6, W7, W8, W9, WI3, and WI4 that corresponds to the one having circular symmetry may be alternatively referred to as a diameter.

As a non-limiting example, each of the plurality of second buried guides 153 may be, for example, an insert nut such as a rivet nut. In this case, each of the second flanges 153F may be a flange of the insert nut. The receiving groove 153G may include an uneven surface such as a screw thread to be coupled to a bolt. Due to the burying and fixing of each of the plurality of second buried guides 153, a portion between the connection part 153C and the extension part 153E may be deformed, thus resulting in the formation of a second buried flange 153EF having a greater width than the widths of the connection part 153C and the extension part 153E.

According to example embodiments, the sealing material 160 may include a plurality of second holes 160H2.The plurality of second holes 160H2 may be penetrated by the plurality of second buried guides 153.The sealing material 160 may horizontally surround the second flange 153F of each of the plurality of second buried guides 153.

According to example embodiments, a height of the second flange 153F may be in a range of about 25% to about 75% of the height of the sealing material 160.For example, when the height of the sealing material 160 is about 4 mm, the height of the second flange 153F may be in a range of about 1 mm to about 3 mm. When the lid plate 170 (see FIG. 1) is coupled to the housing 110, the sealing material 160 may have substantially the same height as the second flange 153F.

Before being pressed by the lid plate 170 (see FIG. 1), a width WI3 of the plurality of second holes 160H2 of the sealing material 160 may be greater than the width W6 of the second flange 153F.Before being pressed by the lead plate 170 (see FIG. 1), the width WI3 of each of the plurality of second holes 160H2 of the sealing material 160 may be equal to the width W6 of the second flange 153F.When the lid plate 170 (see FIG. 1) is coupled to the housing 110, the width WI3 of the plurality of second holes 160H2 of the sealing material 160 may be equal to the width W6 of the second flange 153F.

Referring to FIGS. 1 to 6, the sealing material 160 may be guided by the first and second buried guides 151 and 153 during the assembly of the battery pack 100.In addition, when the lid plate 170 (see FIG. 1) is coupled to the housing 110, the first and second buried guides 151 and 153 may be stoppers that limit a distance between the lid plate 170 (see FIG. 1) and the side wall 110S of the housing 110.Accordingly, additional stopper elements between the lid plate 170 (see FIG. 1) and the housing 110 can be omitted, and the productivity and energy density of the battery pack 100 can be improved.

### (Second Embodiment)

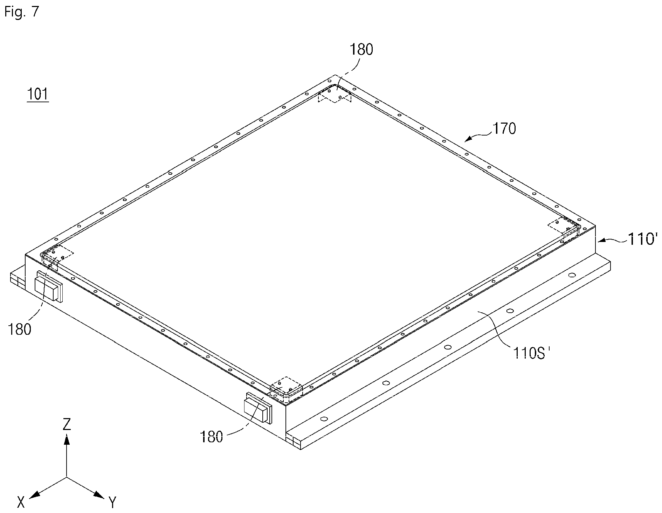

FIG. 7 is a perspective view of a battery pack 101 according to other example embodiments.

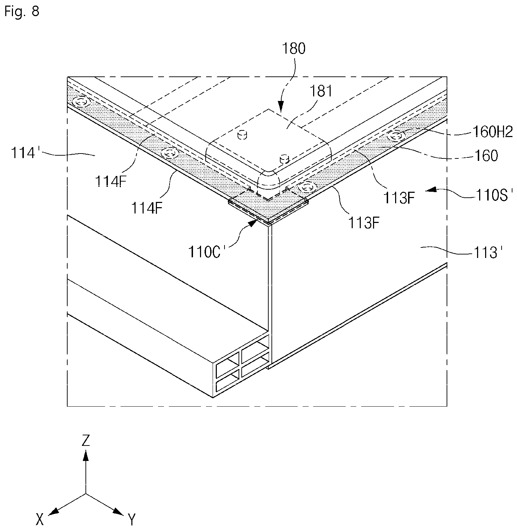

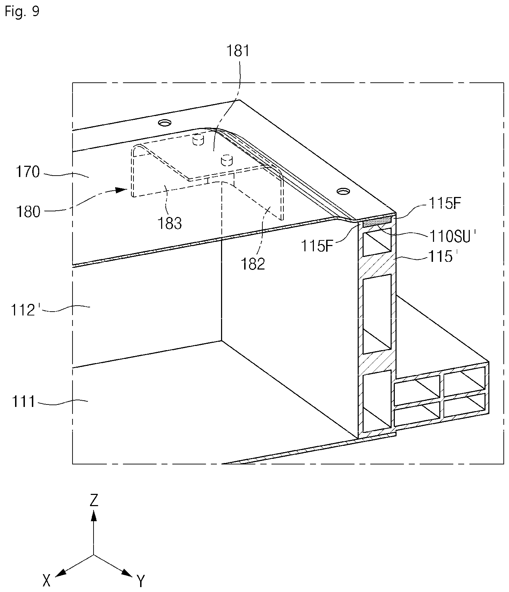

FIGS. 8 and 9 are partial perspective views illustrating a part of the battery pack 101.

Referring to FIGS. 7 to 9, the battery pack 101 may include a housing 110', a plurality of battery assemblies 120, a center beam 130 (see FIG. 1), a plurality of exhaust devices 140, a sealing material 160, a lid plate 170, and a plurality of corner brackets 180.

The plurality of battery assemblies 120 (see FIG. 1), the center beam 130 (see FIG. 1), the plurality of exhaust devices 140, the sealing material 160, and the lid plate 170 are substantially the same as those described above with reference to FIGS. 1 to 6, and thus, a redundant description thereof is omitted.

The lid plate 170 may be coupled to the housing 110'. The lid plate 170 may be in contact with guide protrusions 113F, 114F and 115F protruding from an upper surface 110SU' of a side wall 110S'. Each of the guide protrusions 113F, 114F, and 115F may be a continuous element integrated into second to fourth side walls 113', 114', and 115'.

A height of each of the guide protrusions 113F, 114F, and 115F may be in a range of about 1 mm to about 3 mm. According to example embodiments, a height of each of the guide protrusions 113F, 114F, and 115F may be in a range of about 25% to about 75% of a height of the sealing material 160.

Each of the guide protrusions 113F, 114F, and 115F may include the same material as the second to fourth side walls 113', 114', and 115'. Each of the guide protrusions 113F, 114F, and 115F may include a metal material. According to example embodiments, each of the guide protrusions 113F, 114F, and 115F may include, for example, steel such as carbon steel, nickel steel, chromium steel, nickel chromium steel or manganese steel. According to example embodiments, each of the guide protrusions 113F, 114F, and 115F may include, for example, aluminum.

According to example embodiments, the guide protrusions 113F, 114F, and 115F may be provided at both ends of the upper surface 110SU' of the side wall 110S'. More specifically, when the first and second side walls 112' and 113' are perpendicular to the Y-axis direction and the third and fourth side walls 114' and 115' are perpendicular to the X-axis direction, the guide protrusions 113F may be provided at both ends of the side wall 113' in the Y-axis direction, the guide protrusions 114F may be provided at both ends of the side wall 114' in the X-axis direction, and the guide protrusions 115F may be provided at both ends of the side wall 115' in the X-axis direction.

A first part of the sealing material 160 may be interposed between the guide protrusions 113F.The first part of the sealing material 160 may be in contact with the guide protrusions 113F, the upper surface 110SU' of the side wall 110S, and an edge part of the lid plate 170.A second part of the sealing material 160 may be interposed between the guide protrusions 114F.The second part of the sealing material 160 may be in contact with the guide protrusions 114F, the upper surface 110SU' of the side wall 110S', and an edge part of the lid plate 170.A third part of the sealing material 160 may be interposed between the guide protrusions 115F. The third part of the sealing material 160 may be in contact with the guide protrusions 115F, the upper surface 110SU' of the side wall 110S', and an edge part of the lid plate 170.

Although not clearly shown in FIGS. 7 to 9, the first side wall 112' may also include guide protrusions. A shape and arrangement of the guide protrusions of the first side wall 112' are similar to those of the guide protrusions 113F of the second side wall 113' and thus a redundant description thereof is omitted.

According to example embodiments, each of the guide protrusions 113F, 114F, and 115F may extend between corner portions 110C' of the upper surface 110SU' of the side wall 110S'.According to example embodiments, each of the guide protrusions 113F, 114F, and 115F may extend from one of the corner portions 110C' to one of the other corner portions 110C'.According to example embodiments, each of the guide protrusions 113F, 114F, and 115F may not be formed on the corner portions 110C'.According to example embodiments, each of the guide protrusions 113F, 114F, and 115F may be spaced apart from the corner portions 110C'.Accordingly, when the first to fourth side walls 112', 113', 114', and 115' are processed, a processing tool may be prevented from being interfered by the guide protrusions 113F, 114F, and 115F and the productivity of manufacturing the battery pack 101 may be improved.

According to example embodiments, each of the plurality of corner brackets 180 may be installed on an inner inside of the lid plate 170 or an inner inside of a side wall 110S'. As described above, each of the guide protrusions 113F, 114F, and 115F may not be formed on the corner portions 110C', and the sealing material 160 on the corner portions 110C' may be exposed.

According to example embodiments, each of the plurality of corner brackets 180 may be configured to protect the sealing material 160.Each of the plurality of corner brackets 180 may prevent the sealing material 160 from being damaged by flames and a high-temperature gas inside the battery pack 101.According to example embodiments, each of the plurality of corner brackets 180 may cover the sealing material 160 on the corner portions 110C'.

Each of the plurality of corner brackets 180 may include one of the materials described above with respect to the protrusions 113F, 114F, and 115F.Each of the plurality of corner brackets 180 may be coupled to the lid plate 170 or the side wall by spot welding.

Each of the plurality of corner brackets 180 may include a first surface 181 coupled to the lid plate 170 and second and third surfaces 182 and 183 coupled to the side wall 110S'. According to example embodiments, when the lid plate 170 includes a bent portion, each of the plurality of corner brackets 180 may include a bent portion. Accordingly, the corner brackets 180 and the lid plate 170 may be reliably coupled to each other

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a housing with a plate part and a side wall;
a plurality of battery assemblies on the plate part of the housing;
a plurality of first buried guides provided on an upper surface of the side wall and partially buried in the side wall; and
a sealing material covering the upper surface of the side wall,
wherein each of the plurality of first buried guides comprises:
a first flange protruding from the upper surface of the side wall; and
a body with a width less than a width of the first flange.

2. The battery pack of claim 1, wherein the body is spaced apart from the side wall with the first flange interposed therebetween.

3. The battery pack of claim 1, wherein the sealing material comprises a plurality of holes, and
wherein the plurality of holes surround the first flange of each of the plurality of first buried guides.

4. The battery pack of claim 1, wherein a height of the sealing material is greater than a height of the first flange.

5. The battery pack of claim 1, wherein a height of the first flange is in a range of 1 mm to 3 mm.

6. The battery pack of claim 1, wherein the body includes an uneven surface.

7. The battery pack of claim 1, wherein the plurality of buried guides are on corners of the upper surface of the side wall.

8. The battery pack of claim 1, further comprising a plurality of second buried guides provided on the upper surface of the side wall and partially buried in the side wall,
wherein each of the plurality of second buried guides comprises a second flange protruding from the upper surface of the side wall.

9. The battery pack of claim 8, wherein each of the plurality of second buried guides is interposed between corners of the upper surface of the side wall.

10. The battery pack of claim 8, wherein each of the plurality of second buried guides includes an inner wall defining a receiving groove,
wherein the inner wall includes an uneven surface.

11. A battery pack comprising:
a housing with a plate part and a side wall;
a plurality of battery assemblies on the plate part of the housing;
a sealing material covering an upper surface of the side wall; and
a lid plate coupled to the housing,
wherein the side wall includes a plurality of guide protrusions protruding from the upper surface of the side wall, and
the sealing material is interposed between the plurality of guide protrusions.

12. The battery pack of claim 11, wherein the plurality of guide protrusions are provided at both ends of the side wall.

13. The battery pack of claim 11, wherein a height of each of the plurality of guide protrusions is in a range of 25% to 75% of a height of the sealing material.

14. The battery pack of claim 11, wherein each of the plurality of guide protrusions is spaced apart from corners of the upper surface of the side wall.

15. The battery pack of claim 11, further comprising a plurality of corner brackets coupled to the side wall of the housing or the lid plate, and covering portions of the sealing material on corners of the upper surface of the side wall.
